# EUROPEAN PATENT SPECIFICATION

(11) **EP 1 334 852 B1**
(45) Date of publication and mention of the grant of the patent: **26.10.2005**
(21) Application number: 03002214.9
(22) Date of filing: 31.01.2003
(51) Int. Cl.: B60H 1/00, F25B 27/02, F24D 12/02, F25B 1/10

(54) **Air conditioner having engine cooling apparatus**
Klimaanlage mit Motorkühlung
Appareil de climatisation avec dispositif de refroidissement d'un moteur

(30) Priority: 08.02.2002 JP 2002031964
(43) Date of publication of application: 13.08.2003
(73) Proprietor: SANYO ELECTRIC CO., LTD., Moriguchi-shi, Osaka (JP); Sanyo Electric Air Conditioning Co., Ltd., Ashikaga-shi, Tochigi (JP)
(72) Inventor: Hamada, Kouki, Ota-shi, Gunma (JP)
(74) Representative: Glawe, Delfs, Moll

(56) References cited:
- DE-A- 3 229 265
- US-A- 5 094 085
- US-B1- 6 425 257
- PATENT ABSTRACTS OF JAPAN vol. 018, no. 418 (M-1650), 5 August 1994 (1994-08-05) & JP 06 123517 A (SANDEN CORP), 6 May 1994 (1994-05-06)
- PATENT ABSTRACTS OF JAPAN vol. 018, no. 565 (M-1694), 28 October 1994 (1994-10-28) & JP 06 201220 A (YANMAR DIESEL ENGINE CO LTD), 19 July 1994 (1994-07-19)

## Description

### BACKGROUND OF THE INVENTION

### 1. Field of the Invention

The present invention relates to an air conditioner having a compressor driven by an engine and an engine cooling apparatus for cooling the engine.

### 2. Description of the Related Art

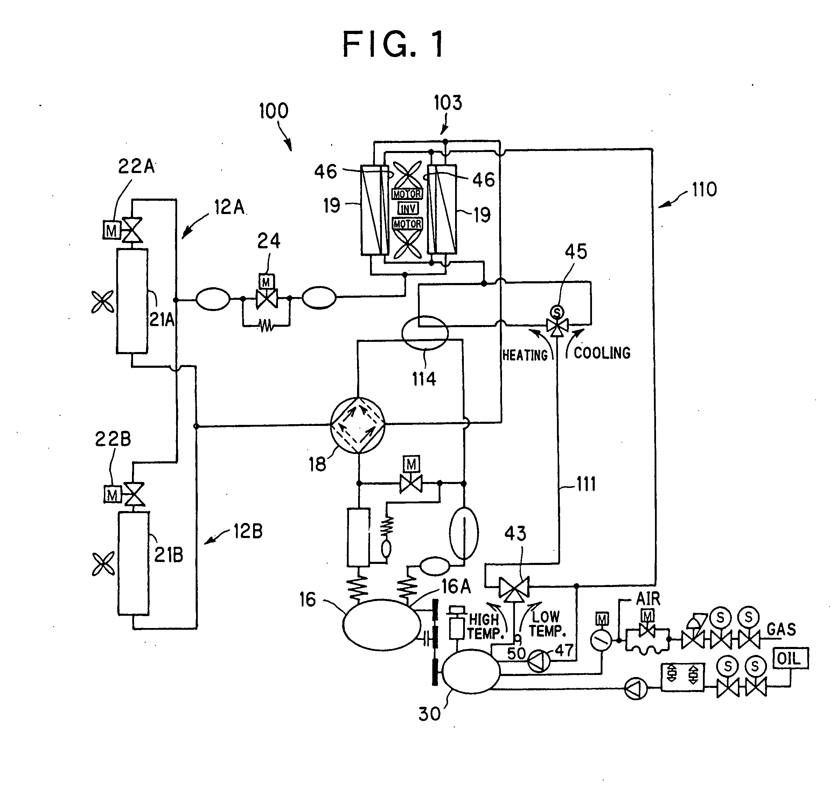

As one of air conditioners is known a gas heat pump type air conditioner 100 as shown in Fig. 1 in which a compressor 16 is driven by an engine (for example, a gas engine 30). In this type of air conditioner 100, an outdoor unit 103 is equipped with the compressor 16, a four-way valve 18, outdoor heat exchangers 19 and an outdoor expansion 24, and each of plural (for example, two) indoor units 12A, 12B is equipped with an indoor heat exchanger 21A, 21B and an indoor expansion valve 22A, 22B.

By switching the four-way valve 18, each of the outdoor heat exchanger 19 serves as a condenser and each of the indoor heat exchangers 21A, 21B serves as an evaporator under cooling operation, so that each of the indoor heat exchangers 21A, 21B cools the room by evaporation heat of refrigerant. Further, by further switching the four-way valve 18, each of the outdoor heat exchangers 19 serves as an evaporator and each of the indoor heat exchangers 21A, 21B serves as a condenser under heating operation, so that each of the indoor heat exchangers 21A, 21B heats the room by the condensation heat of the refrigerant.

A gas engine 30 for driving the compressor 16 for compressing refrigerant is cooled by an engine cooling apparatus 110. The engine cooling apparatus 110 has a substantially closed loop type cooling water pipe 111 having one end connected through the gas engine 30 to an exhaust gas heat exchanger (not shown) affixed to the gas engine 30 and the other end connected directly to the exhaust gas heat exchanger, and a wax three-way valve 43, a three-way valve 45 (electromagnetic type three-way valve), a double pipe type heat exchanger 114, radiators 46 and a circulating pump are successively disposed in this order in the cooling water pipe 111 to constitute the engine cooling apparatus 220. A temperature sensor 50 for detecting the temperature of the engine cooling water is disposed in the cooling water pipe 111 between the exit side of the engine cooling water of the gas engine 30 and the wax three way valve 43.

The engine cooling medium (for example, engine cooling water) withdrawing exhaust heat (heat of exhaust gas) of the engine is cooled (heat-radiated) in the double pipe type heat exchanger 114 and the radiators 46 while circulated in the cooling water pipe 111 by actuation of a circulating pump 47, thereby cooling the gas engine 30.

Under heating operation of the air conditioner 100, the engine cooling water is fed from the wax three-way valve 43 to the double pipe type heat exchanger 114 by the three-way valve 45. The double pipe heat exchanger 114 heat-exchanges the engine cooling water with the refrigerant flowing through the four-way valve 18 into the refrigerant suction port 16A of the compressor 16 to heat the refrigerant (increase the pressure of the refrigerant) and also cools the engine cooling water. The engine cooling water thus cooled is fed to the radiators 46 to be further cooled (heat-radiated), and then fed to the gas engine 30. Apart of the heat radiated from the radiators 46 (the exhaust heat of the gas engine 30) is taken into the outdoor heat exchangers 19 functioning as the evaporators and used as a heat source for the evaporators.

Under cooling operation of the air conditioner 100, the engine cooling water is directly fed from the wax three-way valve 43 to the radiators 46 by the three-way valve 45. The engine cooling water is cooled (heat-radiated) and then fed to the gas engine 30.

Under heating operation of the air conditioner 100, a part of the heat of the engine cooling water which is radiated from the radiators 46 (i.e., the exhaust heat of the gas engine 30) is taken into the outdoor heat exchangers 19 functioning as the evaporators, and used as the heat source for the evaporators. However, the remaining part of the heat of the engine cooling water which is radiated from the radiators 46 is not used as the heat source for the outdoor heat exchangers 19, but radiated to the outside air, resulting in reduction in use efficiency of the exhaust heat of the gas engine 30. Furthermore, since the heat of the engine cooling water is radiated by the double pipe type heat exchanger 114 and the radiators 46, there may be a case where the engine cooling water is excessively cooled.

Furthermore, there is also a problem that under cooling operation or heating operation of the air conditioner 100, the pressure of refrigerant sucked or discharged into/from the compressor is lowered or increased due to variation of the temperature of the outside air or the like to the extent that the operation of the air conditioner 100 is unstable.

In JP2001221531 an air conditioner according to the preamble of claim 1 is disclosed. The air conditioner can efficiently vaporize the refrigerant using the wast heat of the engine and has a stable heating capability regardless of the temperature of the outside air.

### SUMMARY OF THE INVENTION

The present invention has been implemented in view of the foregoing situation, and has an object to provide an air conditioner which can use efficiently the exhaust heat of an engine and enhance the stability of the operation.

These and other objects of the present invention are achieved by an air conditioner according to independent claim 1. The dependent claims treat further advantageous developments of the present invention.

### BRIEF DESCRIPTION OF THE DRAWINGS

Fig. 1 is a circuit diagram showing a refrigerant circuit, etc. of a conventional air conditioner;
Fig. 2 is a circuit diagram showing a refrigerant circuit, etc. of an air conditioner useful for the understanding of the present invention;
Fig. 3 is a diagram showing transition of the temperature of engine cooling water under heating operation of the air conditioner; and
Fig. 4 is a circuit diagram showing a refrigerant circuit, etc. of an embodiment of the air conditioner according to the present invention.

### DETAILED DESCRIPTION OF THE PREFERRED EMBODIMENT

Preferred embodiment according to the present invention will be described hereunder with reference to the accompanying drawings.

### [A] Example useful for the understanding of the present invention

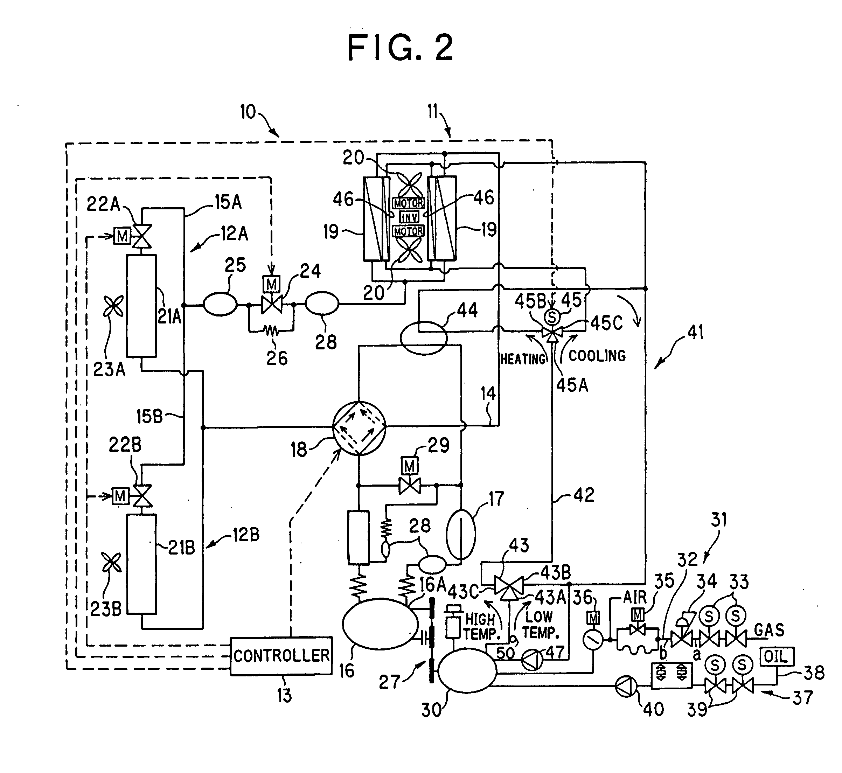

Fig. 2 is a circuit diagram showing a refrigerant circuit, etc. of an air conditioner useful for the understanding of the present invention.

As shown in Fig. 2, a heat pump type air conditioner 10 serving as a refrigerating apparatus includes an outdoor unit 1, for example, plural (for example, two) indoor units 12A, 12B and a controller 13, and the outdoor refrigerant pipe 14 of the outdoor unit 11 is connected to each of the indoor refrigerant pipes 15A, 15B of the indoor units 12A, 12B.

The outdoor unit 11 is disposed outdoors. A compressor 16 is disposed in the outdoor refrigerant pipe 14, and an accumulator 17 is connected to the suction side of the compressor 16 while a four-way valve 18 is connected to the discharge side of the compressor 16. Furthermore, outdoor heat exchangers 19, an outdoor expansion valve 24 and a dry core 25 are successively disposed in this order at the side of the four-way valve 18. Outdoor fans 20 for sucking air from the outdoor heat exchanger (19) side are disposed to be adjacent to the outdoor heat exchangers 19. The compressor 16 is linked to a gas engine through a flexible coupling 27 or the like, and driven by the gas engine 30. Furthermore, a bypass pipe 26 is disposed to bypass the outdoor expansion valve 24.

Each of the indoor units 12A, 12B is disposed indoors. Indoor heat exchangers 21A, 21B are disposed in the indoor refrigerant pipes 15A, 15B respectively, and indoor expansion valves 22A, 22B are disposed in the indoor refrigerant pipes 15A, 15B so as to be in the neighborhood of the indoor heat exchangers 21A, 21B, respectively. Furthermore, indoor fans 23A, 23B for blowing air from the indoor heat exchangers 21A, 21B into the room are disposed to be adjacent to the indoor heat exchangers 21A, 21B.

In Fig. 2, reference numeral 28 represents a strainer, and reference numeral 29 represents a relief valve for relieving refrigerant pressure at the discharge side of the compressor 16 to the suction side of the compressor 16.

The controller 13 is disposed in the outdoor unit 11, and controls the driving of the outdoor unit 11 and the indoor units 12A, 12B. Specifically, the controller 13 controls the gas engine 30 (that is, the compressor 16), the four-way valve 18, the outdoor fans 20 and the outdoor expansion valve 24 in the outdoor unit 1 and the indoor expansion valves 22A, 22B and the indoor fans 23A, 23B in the indoor units 12A, 12B. Furthermore, the controller 13 controls a circulating pump 47, a three-way valve 45, etc. of an engine cooling apparatus 41 as described later.

The controller 13 switches the four-way valve 18 to set the heat pump type air conditioner 10 to cooling operation or heating operation. That is, when the controller 13 switches the four-way valve 18 to the cooling side, refrigerant flows as indicated by a solid-line arrow, the outdoor heat exchangers 19 serve as condensers and the indoor heat exchangers 21A, 21B serve as evaporators, so that the air conditioner is kept under cooling operation and each of the indoor heat exchanges 21A, 21B cools the room. On the other hand, when the controller 13 switches the four-way valve 18 to the heating side, the refrigerant flows as indicated by a broken-line arrow, the indoor heat exchangers 21A, 21B serve as condensers and the outdoor heat exchangers 19 serve as evaporators, so that the air conditioner is kept under heating operation and each of the indoor heat exchangers 21a, 21B cools the room.

Furthermore, the controller 13 controls the valve opening degree of each of the indoor expansion valves 22A, 22B in accordance with the air conditioning load under cooling operation. On the other hand, the controller 13 controls the valve opening degree of each of the outdoor expansion valve 24 and the indoor expansion valves 22A, 22B in accordance with the air conditioning load under heating operation.

Air-fuel mixture is fed from an engine fuel supply apparatus into a combustion chamber (not shown) of the gas engine 30 for driving the compressor 16. The engine fuel supply apparatus 31 contains two fuel cutoff valves 33, a zero governor 34, a fuel flow control valve 35 and an actuator which are successively disposed in this order in a fuel supply pipe 32, and the end portion of the fuel supply pipe 32 at the actuator (36) side is connected to the combustion chamber of the gas engine 30.

The two fuel cutoff valves 33 are disposed in series to constitute a two-closing type fuel cutoff mechanism, and the two fuel cutoff valves 33 are fully closed or opened interlockingly with each other to selectively perform one of cutoff and intercommunication with no leak of fuel gas.

The zero governor 34 is used to stabilize the operation of the gas engine 30 by adjusting the fuel gas pressure at a secondary side (a secondary pressure b) after the zero governor 34 in the fuel supply pipe 32 to a fixed prescribed pressure irrespective of variation of the fuel gas pressure at a primary side (a primary pressure a) before the zero governor 34 in the fuel supply pipe 32.

The fuel flow control valve 35 is used to optimally adjust the air-fuel ratio of air-fuel mixture generated by introducing air from the upstream side of the actuator 36. The actuator 36 adjusts the supply amount of the air-fuel mixture to be supplied into the combustion chamber of the gas engine 30 to control the rotational number of the gas engine 30.

An engine oil supply apparatus 37 is connected to the gas engine 30. The engine oil supply apparatus 37 has an oil cutoff valve 39, an oil supply pump 40, etc. disposed in an oil supply pipe 38, and supplies engine oil to the gas engine 30 duly.

The control of the gas engine 30 by the controller 13 is specifically performed by controlling the fuel cutoff valve 33, the zero governor 34, the fuel flow control valve 35 and the actuator 36 of the engine fuel supply apparatus 31 and the oil cutoff valve 39 and the oil supply pump 40 of the engine oil supply apparatus 37 through the control 13.

The gas engine 30 is cooled by an engine cooling medium (for example, engine cooling water) circulated in an engine cooling apparatus 41 disposed in the outdoor unit 11. The engine cooling apparatus 41 has a substantially closed loop type cooling water pipe 42 having one end connected through the gas engine 30 to an exhaust gas heat exchanger (not shown) affixed to the gas engine 30, and the other end which is connected directly to the exhaust gas heat exchanger, and a wax three-way valve 43, a three-way valve 45, a plate type heat exchanger 44 serving as an heat exchanger, radiators 46 and a circulating pump 47 are successively disposed in this order in the cooling water pipe 42 to thereby constitute the engine cooling apparatus 41. The plate type heat exchanger 44 and the radiators 46 are disposed in parallel to each other in the cooling water pipe 42 serving as a circulating path for the engine cooling water.

The circulating pump 47 increases the pressure of the engine cooling water under actuation to circulate the engine cooling water in the cooling water pipe 42.

The wax three-way valve 43 is used to quickly heat the gas engine 30. The wax three-way valve 43 is disposed so that the inlet side port thereof is connected to the exhaust gas heat exchanger affixed to the gas engine 30 in the cooling water pipe 42, the low-temperature side port 43B thereof is connected to the suction side of the circulating pump 47 in the cooling water pipe 42 and the high-temperature side port 43C is connected to the three-way valve (45) side in the cooling water pipe 42.

Furthermore, the three-way valve 45 is disposed so that the inlet side port 45A thereof is connected to the three-way valve (43) side in the cooling water pipe 42, the first port 45B thereof is connected to the plate type heat exchanger (44) side in the cooling water pipe 42 and the second port 45C thereof is connected to the radiator (46) side in the cooling water pie 42.

The three-way valve 45 is an electromagnetic type three-way valve. Accordingly, the engine cooling water can be selectively fed to one of the plate type heat exchanger (44) side and the radiator (46) side by merely switching the three-way valve 45.

The three-way valve 45 is switched by the controller 13 (switching means) so that the engine cooling water flowing from the wax three-way valve 43 is made to flow through the first port 45B of the three-way valve 45 to the plate type heat exchanger (44) side under heating operation or flow through the second port 45C of the three-way valve 45 to the radiator (46) side under cooling operation.

The plate type heat exchanger 44 is disposed at the refrigerant suction side of the compressor 16 and heat-exchanges the refrigerant flowing through the four-way valve 18 to the refrigerant suction port 16A of the compressor 16 with the engine cooling water flowing from the three-way valve 45 into the plate type heat exchanger 44, whereby the refrigerant is heated by the exhaust heat of the gas engine 30 to increase the temperature of the refrigerant (increase the pressure of the refrigerant) and also the engine cooling water is cooled.

The radiators 46 are used to radiate the heat of the engine cooling water flowing into the radiators 46, and disposed to be adjacent to the outdoor heat exchangers 19. Accordingly, the heat radiation is promoted by the outdoor fans 20. The radiators 46 are disposed at the downstream side of the outdoor heat exchangers 19 in the air flowing direction.

A temperature sensor 50 for detecting the temperature of the engine cooling water is equipped in the cooling water pipe 42 between the gas engine 30 and the wax three-way valve 43 which corresponds to the exit side of the engine cooling water. A signal indicating a temperature detected by the temperature sensor 50 is transmitted to the controller 13.

The engine cooling water flows from the discharge side of the circulating pump 47 into the exhaust gas heat exchanger to withdraw the exhaust heat (the heat of the exhaust gas) of the gas engine 30, and then flows into the gas engine 30 to cool the gas engine and thus to be heated. For example, when the engine cooling water flows into the exhaust gas heat exchanger of the gas engine 30 while kept at about 70°C, the engine cooling water flows into the gas engine 30 to cool the gas engine 30 after withdrawing the exhaust heat (the heat of the gas exhaust of the gas engine 30, and thus heated to about 80°C.

When the temperature of the engine cooling water flowing from the gas engine 30 into the wax three-way valve 43 is low (for example, less than 80°C), the flow amount of the engine cooling water flowing from the high-temperature side port 43C of the wax three-way valve 43 to the three-way valve 45 is smaller than the flow amount of the engine cooling water returning from the low-temperature side port 43B of the wax three-way valve 43 to the circulating pump 47, so that the engine cooling water mainly heats the gas engine 30 quickly. On the other hand, when the temperature of the engine cooling water is high (for example, 80°C or more), the flow amount of the engine cooling water flowing from the high-temperature side port 43C of the wax three-way valve 43 to the three-way valve 45 is larger than the flow amount of the engine cooling water returning from the low-temperature side port 43B of the wax three-way valve 43 to the circulating pump 47.

Next, the operation of the engine cooling apparatus 41 under cooling/heating operation of the air conditioner 10 will be described hereunder.

Under heating operation, the three-way valve 45 is switched to the plat type heat exchanger (44) side by the controller 13. Accordingly, the engine cooling water flowing from the high-temperature side port 43C of the wax three-way valve 43 to the three-way valve 45 is fed from the first port 45B of the three-way valve 45 to the plate type heat exchanger 44 to be heat-exchanged with the refrigerant, so that the engine cooling water is cooled (radiated). The engine cooling water thus cooled is passed through the suction side of the circulating pump 47 and then fed to the exhaust gas heat exchanger of the gas engine 30. Therefore, no engine cooling water flows to the radiator (46) side.

On the other hand, under cooling operation, the three-way valve 45 is switched to the radiator (46) side by the controller 13. Accordingly, the engine cooling water flowing from the high-temperature side port 43C of the wax three-way valve 45 to the three-way valve 45 is fed from the second port 45C of the three-way valve. 45 to the radiators 46 to be cooled (radiated). The engine cooling water thus cooled is passed through the suction side of the circulating pump 47 and then fed to the exhaust gas heat exchanger of the gas engine 30. Therefore, no engine cooling water flows to the plate type heat exchanger (44) side.

Next, the transition of the temperature of the engine cooling water detected by the temperature sensor 50 when the air conditioner 10 (Fig. 2) is driven under heating operation will be described.

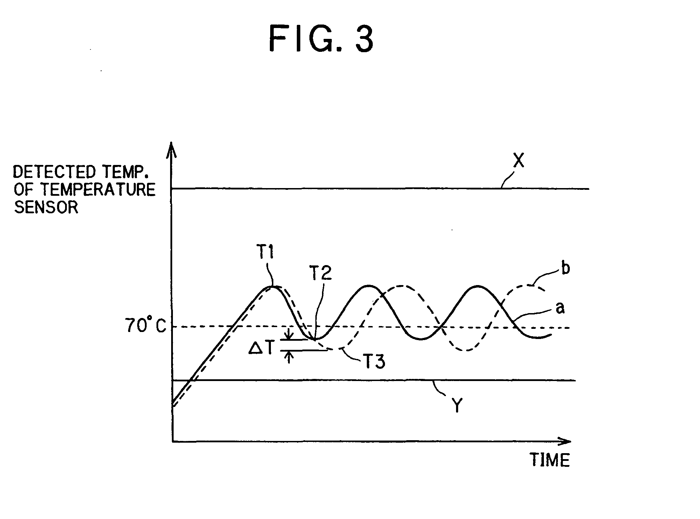

After the operation of the air conditioner is started, the temperature detected by the temperature sensor 50 increases and reaches the upper limit temperature T1 as indicated by a solid line a in Fig. 3 because the gas engine 30 (Fig. 2) is quickly heated. Thereafter, the flow amount of the engine cooling water which is passed through the wax three-way valve 43 (Fig. 2), cooled in the plate type heat exchanger 44 (Fig. 2) and returned to the gas engine 30 is increased because of the increase of the temperature of the engine cooling water, and thus the temperature of the engine cooling water is reduced to the lower limit temperature T2. At this time, the flow amount of the engine cooling water which is passed through the wax three-way valve 43, cooled in the plate type heat exchanger 44 and then returned to the gas engine 30 is reduced and the flow amount of the engine cooling water which is passed through the wax three-way valve 43 and directly returned to the gas engine 30 is increased because of the reduction in temperature of the engine cooling water, so that the temperature of the engine cooling water increases again. Accordingly, the temperature of the engine cooling water discharged from the gas engine 30 is varied between the upper limit temperature T1 and the lower limit temperature T2 as shown in Fig. 3.

The temperature of the engine cooling water detected by the temperature sensor 50 when the conventional air conditioner 100 (Fig. 1) is driven under heating operation exhibits the transition as indicated by a broken line b. As compared with the lower limit temperature T3 of the engine cooling water when the air conditioner 10 (Fig. 2) is driven under cooling operation, the lower limit temperature T2 of the engine cooling water when the air conditioner 10 (Fig. 2) is driven under heating operation is higher by the temperature difference ΔT (=T2-T3) because the engine cooling water suffers no radiation (no heat loss) by the radiators 46. Accordingly, in the plate type heat exchanger 44, the refrigerant at the suction side of the compressor d16 is heated to a higher temperature by the engine cooling water, so that the heating power is increased. Furthermore, the variation of the temperature of the engine cooling water discharged from the gas engine 30 (Fig. 2) is reduced.

In Fig. 3, if the temperature of the engine cooling water discharged from the gas engine 30 (Figs. 1, 2) exceeds a temperature X, deterioration of the engine oil in the gas engine 30 is hastened. On the other hand, if the temperature of the engine cooling water discharged from the gas engine 30 is reduced to less than a temperature Y, deterioration of the engine oil in the gas engine 30 is also hastened. Accordingly, the lower limit temperature T2 of the engine cooling water when the air conditioner 10 (Fig. 2) is driven under heating operation is higher by the temperature difference ΔT (= T2 - T3) as compared with the lower limit temperature T3 of the engine cooling water when the air conditioner 100 (Fig. 1) is driven under heating operation. Therefore, the temperature of the engine cooling water is farther away from the temperature Y at which the deterioration of the engine oil in the gas engine 30 is hastened, so that the engine oil is hardly deteriorated in the gas engine 30.

For example, the engine oil to be fed to the gas engine 30 by the engine oil supply device 37 would be hastened in deterioration if the temperature thereof exceeds about 100°C or if the temperature thereof is below about 60°C. Therefore, it is preferable that the temperature of the engine oil in the gas engine 30 is set to a value in the range from about 70°C to 80°C. The temperature of the engine oil in the gas engine 30 is varied substantially in the same manner as the temperature of the engine cooling water at the discharge side of the gas engine 30. The temperature of the engine cooling water is preferably set to such a temperature that the engine oil in the gas engine 30 is hardly deteriorated. Accordingly, the temperature of the engine cooling water is preferably set to a value in the range from about 70°C to 80°C.

In Fig. 3, the temperature T1 is set to a value in the range from about 75°C to 79°C, and the temperature T2 of the engine cooling water when the air conditioner 10 (Fig. 2) is driven under heating operation more closely approaches to 70°C by the temperature difference ΔT as compared with the temperature T3 of the engine cooling water when the air conditioner 100 (Fig. 1) is driven under heating operation, so that the engine oil in the gas engine 30 is hardly deteriorated.

Accordingly , under heating operation of the air conditioner 10, the three-way valve 45 is switched to the plate type heat exchanger (44) side by the controller 13, whereby the engine cooling water is prevented from flowing to the radiator (46) side. Therefore, the radiation of the engine cooling water from the radiators 46 to the outside air can be prevented, and the exhaust heat of the gas engine 30 can be efficiently used.

Furthermore, the radiation of the engine cooling water from the radiators 46 can be prevented, so that the engine cooling water can be prevented from being excessively cooled. Accordingly, the refrigerant at the suction side of the compressor 1 is heated at a higher temperature in the plate type heat exchanger 44, so that the heating power can be increased. Furthermore, the variation of the temperature of the engine cooling water discharged from the gas engine 30 is reduced, and thus the temperature (pressure) of the refrigerant in the plate type heat exchanger 44 is stabilized, so that the operation stability can be enhanced.

Accordingly, the plate type heat exchanger 44 has a higher heat-exchange efficiency than the double pipe type heat exchanger 114 (Fig. 1), so that the exhaust heat of the gas engine 30 can be more efficiently used.

### [B] Embodiment

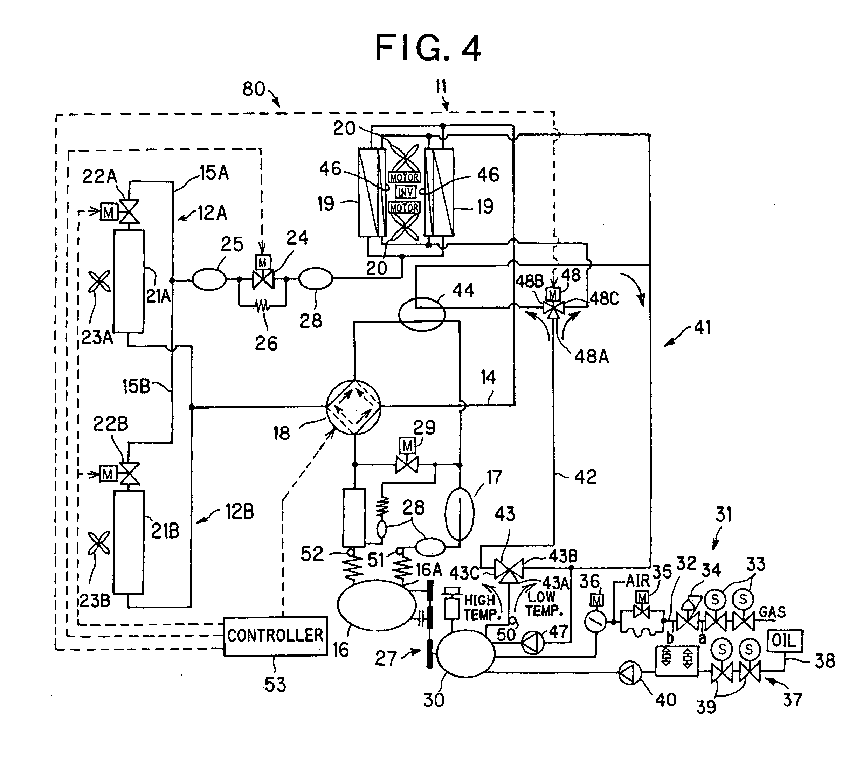

Fig. 4 is a circuit diagram showing a refrigerant circuit, etc. of an embodiment of the air conditioner of the present invention. In the embodiment, the same elements as in the example useful for the understanding of the present invention are represented by the same reference numerals, and the description thereof is omitted.

An air conditioner 80 according to the embodiment shown in Fig. 4 is characterized in that electric motor-driven type three-way valve 48 is used in place of the electromagnetic type three-way valve 45 in the air conditioner 10 of the example useful for the understanding of the present invention shown in Fig. 2. The inlet side port 48A of the three-way valve 48 is connected to the wax three-way valve (43) side in the cooling water pipe 42, the first port 48B of the three-way valve 48 is connected to the plate type heat exchanger (44) side in the cooling water pipe 42, and the second port 48C of the three-way valve 48 is connected to the radiator (46) side.

A low-pressure side pressure sensor 51 for detecting the pressure of the refrigerant at the suction side of the compressor 16 is equipped at the refrigerant suction side (low-pressure side) of the compressor 16. A high-pressure side pressure sensor 52 for detecting the pressure at the refrigerant at the discharge side of the compressor 16 is equipped at the refrigerant discharge side (high-pressure side) of the compressor 16. A signal indicating the pressure detected by each of the pressure sensors 51, 52 is transmitted to the controller 53. The controller 53 is disposed in the outdoor unit 11 to control the driving of the outdoor unit 11 and the indoor units 12A, 12B. Specifically, the controller 53 controls the gas engine 30 (that is, the compressor 16), the four-way valve 18, the outdoor fans 20 and the outdoor expansion valves 24 of the outdoor unit 11, and the indoor expansion valves 22A, 22B and the indoor fans 23A, 23B of the indoor units 12A, 12B. Furthermore, the controller 53 controls the circulating pump 47 of the engine cooling apparatus 41, the three-way valve 48, etc.

The controller 53 adjusts the valve opening degree of the three-way valve 48 on the basis of the detection results of the pressure sensors 51, 52 (valve opening degree adjusting means). The three-way valve 48 is a proportional type three-way valve, for example.

When the air conditioner 80 is driven under normal cooling operation, as in the case of the air conditioner 10 (Fig. 2) of the example useful for the understanding of the present invention, the controller 53 (the valve opening degree adjusting means) adjusts the valve opening of the three-way valve 48 so that the engine cooling water is fed to only the radiator (46) side (out of the plate type heat exchanger (44) side and the radiator (46) side) and no engine cooling water is fed to the plate type heat exchanger (44) side.

When the outside temperature is reduced (for example, 0°C or less) under cooling operation of the air conditioner 80, there may be a case where the refrigerant pressure at the refrigerant suction side (low-pressure side) of the compressor 16 is reduced. If the refrigerant pressure is reduced, the evaporation temperature of the indoor heat exchangers 21A, 21B is reduced, and the operation stability may be lost. Accordingly, when the refrigerant pressure detected by the low-pressure side pressure sensor 51 is lower than a first predetermined lower limit pressure, the opening degree of the three-way valve 48 is adjusted by the controller 53 so that a part of the engine cooling water is fed to the plate type heat exchanger 44. Accordingly, the engine cooling water is distributed to the plate type heat exchanger 44 and the radiators 46. For example, the valve opening degree of the three-way valve 48 is adjusted so that 70% of the engine cooling water is fed to the radiator (46) side and 30% of the engine cooling water is fed to the plate type heat exchanger (44) side. Therefore, a part of the engine cooling water flows into the plate type heat exchanger 44, and the refrigerant and the engine cooling water are heat-exchanged with each other in the plate type heat exchanger 44 to increase the temperature (the pressure) of the refrigerant, so that the evaporation temperature of the indoor heat exchangers 21A, 21B is increased.

Here, the first predetermined lower limit pressure is the lower limit pressure at which the air conditioner 80 can perform the cooling operation stably. That is, if the refrigerant pressure at the low-pressure side of the compressor 16 is reduced to be less than the first predetermined lower limit pressure, the cooling operation of the air conditioner 80 is unstable.

Under the normal heating operation of the air conditioner 80, as in the case of the air conditioner 10 (Fig. 2), the controller 53 (the valve opening degree adjusting means) adjusts the valve opening degree of the three-way valve 48 so that the engine cooling water is fed to only the plate type heat exchanger (44) side and no engine cooling water is fed to the radiator (46) side.

When the number of indoor units 12A, 12B being drive is reduced (for example, only the indoor unit 12A is driven) under heating operation of the air conditioner 80, there may be such a case that the refrigerant pressure at the refrigerant suction side (low-pressure side) of the compressor 16 is increased and the operation stability is lost. Accordingly, when the refrigerant pressure detected by the low-pressure side pressure sensor 51 exceeds a first predetermined upper limit pressure higher than the first predetermined lower limit pressure, the controller 53 adjusts the valve opening degree of the three-way valve 48 so that a part of the engine cooling water is fed to the radiators 46, whereby the engine cooling water is distributed to the plate type heat exchanger 44 and the radiators 46. For example, the valve opening degree of the three-way valve 48 is adjusted so that 70% of the engine cooling water is fed to the plate type heat exchanger (44) side and 30% of the engine cooling water is fed to the radiator (46) side. Accordingly, a part of the engine cooling water flows into the radiators 46, and thus the engine cooling water is radiated, so that the refrigerant is prevented from being excessively increased in temperature (pressure) in the plate type heat exchanger 44.

The first predetermined upper limit pressure is the upper limit pressure at which the air conditioner can performs the heating operation stably. That is, if the refrigerant pressure at the low-pressure side of the compressor 16 exceeds the first predetermined upper limit pressure, the heating operation of the air conditioner 80 is unstable.

Since the radiators 46 are disposed at the downstream side of the outdoor heat exchanger 19 in the air flow direction, the heat withdrawn by the outdoor heat exchanger 19 when the heat exchanger 19 functions as an evaporator is little, and thus most of the heat is radiated to the outside air.

Furthermore, when the temperature of the outside air is low (for example, 0°C or less) under cooling operation of the air conditioner 80, the refrigerant pressure at the refrigerant discharge side (high-pressure side of the compressor 16 maybe reduced due to reduction in refrigerant pressure at the refrigerant suction side (low-pressure side of the compressor 16. If this refrigerant pressure is reduced, the evaporation temperature of each of the indoor heat exchangers 21A, 21B is reduced, so that the operation stability may be lost. Accordingly, when the refrigerant pressure detected by the high-pressure side pressure sensor 52 is reduced to be less than a second predetermined lower limit pressure, the controller 53 adjusts the valve opening degree of the three-way valve 48 so that a part of the engine cooling water is fed to the plate type heat exchanger 44, whereby the engine cooling water is distributed to the plate type heat exchanger 44 and the radiators 46. For example, the valve opening degree of the three-way valve 48 is adjusted so that 70% of the engine cooling water is fed to the radiator (46) side and 30% of the engine cooling water is fed to the plate type heat exchanger (44) side. Accordingly, a part of the engine cooling water flows into the plate type heat exchanger 44 and the refrigerant and the engine cooling water are heat-exchanged with each other in the plate type heat exchanger 44 to thereby increase the temperature (pressure) of the refrigerant and thus increase the evaporation temperature of the indoor heat exchangers 21A, 21B.

Here, the second predetermined lower limit pressure is the lower limit pressure at which the air conditioner 80 performs the cooling operation stably. That is, if the refrigerant pressure at the high-pressure side of the compressor 16 is reduced to be less than the second predetermined lower limit pressure, the cooling operation of the air conditioner 80 is unstable.

Furthermore, when the number of the indoor units 12A, 12B being driven is reduced under heating operation of the air conditioner 80, there may occur such a case that the refrigerant pressure at the refrigerant discharge side (high-pressure side) of the compressor 16 rises up and the operation stability is lost due to increase of the refrigerant pressure at the refrigerant suction side (low-pressure side) of the compressor 16. Accordingly, when the refrigerant pressure detected by the high-pressure side pressure sensor 52 exceeds a second predetermined upper limit pressure higher than the second predetermined lower limit pressure, the controller 53 adjusts the valve opening degree of the three-way valve 48 so that a part of the engine cooling water is fed to the radiators 46, whereby the engine cooling water is distributed to the plate type heat exchanger 44 and the radiators 46. For example, the valve opening degree of the three-way valve 48 is adjusted so that 70% of the engine cooling water is fed to the plate type heat exchanger 44 and 30% of the engine cooling water is fed to the radiator (46) side. Accordingly, a part of the engine cooling water flows into the radiators 46 to radiate the engine cooling water, so that the refrigerant can be prevented from being excessively increased in temperature (pressure) in the plate type heat exchanger 44.

Here, the second predetermined upper limit pressure is the upper limit pressure at which the air conditioner 80 performs the heating operation stably. That is, when the refrigerant pressure at the high-pressure side of the compressor 16 exceeds the second predetermined upper limit pressure, the heating operation of the air conditioner 80 is unstable.

The air conditioner 80 according to the embodiment has also the same effect as in the example useful for the understanding of the present invention and according to the embodiment, when the pressure of the suction refrigerant of the compressor which is detected by the low-pressure side pressure sensor 51 is reduced to be less than the first predetermined lower limit pressure, the controller 53 adjusts the valve opening degree of the three-way valve 48 so that a part of the engine cooling water is fed to the plate type heat exchanger 44. Therefore, the refrigerant and the engine cooling water is heat-exchanged with each other by the plate type heat exchanger 44 to increase the temperature (pressure) of the suction refrigerant of the compressor 16, so that the operation stability of the air conditioner 80 can be enhanced.

Furthermore, according to the embodiment, when the pressure of the suction refrigerant of the compressor 16 which is detected by the low-pressure side pressure sensor 51 exceeds the first predetermined upper limit pressure, the controller 53 adjusts the valve opening degree of the three-way valve 48 so that a part of the engine cooling water is fed to the radiators 46, so that the flow amount of the engine cooling water to the plate type heat exchanger 44 is reduced and the suction refrigerant of the compressor 16 can be prevented from being excessively increased in temperature (pressure). Therefore, the operation stability of the air conditioner 80 can be enhanced.

Still furthermore, according to the embodiment, when the pressure of the discharge refrigerant of the compressor 16 which is detected by the high-pressure side pressure sensor 52 is reduced to be less than the second predetermined lower limit pressure, the controller 53 adjusts the valve opening degree of the three-way valve 48 so that a part of the engine cooling water is fed to the plate type heat exchanger 44, so that the refrigerant and the engine cooling water are heat-exchanged with each other in the plate type heat exchanger 44 to increase the temperature (pressure) of the suction refrigerant of the compressor 16. Therefore, the operation stability of the air conditioner 80 can be enhanced.

Still furthermore, when the pressure of the discharge refrigerant of the compressor 16 which is detected by the high-pressure side pressure sensor 52 exceeds the second predetermined upper limit pressure, the controller 53 adjusts the valve opening degree of the three-way valve 48 so that a part of the engine cooling water is fed to the radiators 46 so that the flow amount of the engine cooling water to the plate type heat exchanger 44 is reduced and the suction refrigerant of the compressor 16 can be prevented from being excessively increased in temperature (pressure). Therefore, the operation stability of the air conditioner 80 can be enhanced.

Still furthermore, according to the embodiment, since the three-way valve 48 is an electric-motor driven type three-way valve, the engine cooling water can be selectively fed to the plate type heat exchanger (44) side, the radiator (46) side or both the plate type heat exchanger (44) side and the radiator (46) side by adjusting the valve opening degree of the three-way valve 48.

In the embodiment, the valve opening degree of the three-way valve 48 is adjusted on the basis of the detection results of the low-pressure side pressure sensor 51 and the high-pressure side pressure sensor 52, however, the present invention is not limited to this embodiment. For example, the valve opening degree of the three-way valve 48 may be adjusted on the basis of the detection result of any one of the low-pressure side pressure sensor 51 and the high-pressure side pressure sensor 52. In this case, any one of the low-pressure side pressure sensor 51 and the high-pressure side pressure sensor 52 may be omitted.

The present invention is not limited to the above embodiment, and various modifications may be made without departing from the subject matter of the present invention. For example, in the above embodiment, the number of the outdoor heat exchangers 19 (the radiators 46, the outdoor fans 20) and also the number of the indoor units 21A, 21B are respectively equal to two. However, these numbers are not limited to two, and may be set to one or three or more.

As described above, according to the present invention, the exhaust heat of the engine can be efficiently used, and the operation stability of the air conditioner can be enhanced.

## Claims

1. An air conditioner (80) having a compressor (16) driven by an engine (30) and an engine cooling apparatus (41) for circulating engine cooling medium through a circulating passage to cool the engine (30), said engine cooling apparatus (41) including a heat exchanger (44) for performing the heat-exchange between refrigerant at the suction side of said compressor (16) and the engine cooling medium, at least one radiator (46) for radiating heat of the engine cooling medium, and a three-way valve having a first port for selectively feeding the engine cooling medium to said heat exchanger (44) and a second port for selectively feeding the engine cooling medium to said at least one radiator (46), said heat exchanger (44) and said at least one radiator (46) being connected to each other through said three-way valve (48) in parallel in said circulating passage,
**characterised in that** said three-way valve is an electric-motor driven three-way valve (48) whose opening degree is variable and that said engine cooling apparatus (41) further includes valve opening degree adjusting means (53) having a pressure sensor (51, 52) for detecting the pressure of the refrigerant at the suction side of said compressor (16) and/or at the discharge side of said compressor (16), said valve opening degree adjusting means (53) adjusting the valve opening degree of said electric-motor driven three-way valve (48) on the basis of the detection result of said pressure sensor (51, 52).

2. The air conditioner (80) as claimed in claim 1, wherein said valve opening degree adjusting means (53) is adapted to adjust the valve opening degree of said electric-motor driven three-way valve (48) so that a distribution ratio of the engine cooling medium to be fed to said heat exchanger (49) and said radiator (46) is varied on the basis of the detection result of said pressure sensor (51, 53).

3. The air conditioner as claimed in claim 2, wherein said opening degree adjusting means (53) is adapted to adjust the valve opening degree of said electric-motor drive three-way valve (48) so that the engine cooling mediums is fed to only the radiator side under normal cooling operation, and when the detection result of said pressure sensor indicates that the pressure of the refrigerant is reduced to less than a predetermined lower limit pressure under cooling operation, a part of the engine cooling medium is fed to said heat exchanger side.

4. The air conditioner (80) as claimed in claim 2, wherein said opening degree adjusting means (53) is adapted to adjust the valve opening degree of said electric-motor drive three-way valve (48) so that the engine cooling mediums is fed to only the heat exchanger side under normal heating operation, and when the detection result of said pressure sensor indicates that the pressure of the refrigerant exceeds a predetermined upper limit pressure under heating operation, a part of the engine cooling medium is fed to said radiator side.

## Patentansprüche

1. Klimaanlage (80) mit einem Kompressor (16), der durch eine Maschine (30) angetrieben wird, und einem Maschinenkühlgerät (41) zum Zirkulieren von Kühlmittel durch einen Zirkulationsdurchlass zum Kühlen der Maschine (30), wobei das Maschinenkühlgerät (41) einen Wärmetauscher (44) aufweist zur Durchführung von Wärmetausch zwischen Kühlmittel an der Saugseite des Kompressors (16) und dem Maschinenkühlmedium, zumindest einem Radiator (46) zum Abstrahlen von Wärme des Maschinenkühlmediums und einem Dreiwegeventil mit einem ersten Durchlass zum selektiven Zuführen des Maschinenkühlmediums an den Wärmetauscher (44) und einem zweiten Durchlass zum selektiven Zuführen des Maschinenkühlmediums an den zumindest einen Radiator (46), wobei der Wärmetauscher (44) und der zumindest eine Radiator (46) miteinander über das Dreiwegeventil (48) parallel in dem Zirkulationsdurchlass verbunden sind, **dadurch gekennzeichnet, dass** das Dreiwegeventil ein durch einen Elektromotor betriebenes Dreiwegeventil (48) ist, dessen Öffnungsgrad variabel ist, und dass das Maschinenkühlgerät (41) ferner ein Ventilöffnungsgrad-Einstellmittel (53) aufweist mit einem Drucksensor (51, 52) zur Erfassung des Druckes des Kühlmittels an der Saugseite des Kompressors (16) und/oder an der Auslassseite des Kompressors (16), wobei das Ventilöffnungsgrad-Einstellmittel (53) den Ventilöffnungsgrad des durch einen Elektromotor betriebenen Dreiwegeventils (48) auf Grundlage des Erfassungsergebnisses des Drucksensors (51, 52) einstellt.

2. Klimaanlage (80) nach Anspruch 1, wobei das Ventilöffnungsgrad-Einstellmittel (53) ausgebildet ist, den Ventilöffnungsgrad des durch einen Elektromotor betriebenen Dreiwegeventils (48) so einzustellen, dass ein Verteilungsverhältnis des Maschinenkühlmediums, dass dem Wärmetauscher (49) und dem Radiator (46) zuzuführen ist, auf Grundlage des Erfassungsergebnisses des Drucksensors (51, 53) eingestellt wird.

3. Klimaanlage nach Anspruch 2, wobei das Öffnungsgrad-Einstellmittel (53) ausgebildet ist, den Ventilöffnungsgrad des durch einen Elektromotor betriebenen Dreiwegeventils (48) so einzustellen, dass das Maschinenkühlmedium im normalen Kühlbetrieb nur der Radiatorseite zugeführt wird, und, wenn das Erfassungsergebnis des Drucksensors anzeigt, dass der Druck des Kühlmittels unter einen vorgegebenen unteren Grenzdruck im Kühlbetrieb reduziert wird, ein Teil des Maschinenkühlmediums zu der Wärmetauscherseite gefördert wird.

4. Klimaanlage (80) nach Anspruch 2, wobei das Öffnungsgrad-Einstellmittel (53) ausgebildet ist, um den Ventilöffnungsgrad des durch einen Elektromotor betriebenen Dreiwegeventils (48) so einzustellen, dass das Maschinenkühlmedium im normalen Heizbetrieb nur der Wärmetauscherseite zugeführt wird, und, wenn das Erfassungsergebnis des Drucksensors anzeigt, dass der Druck des Kühlmittels beim Heizbetrieb einen vorgegebenen oberen Grenzdruck überschreitet, ein Teil des Maschinenkühlmediums der Radiatorseite zugeführt wird.

## Revendications

1. Climatiseur (80) comportant un compresseur (16) entraîné par un moteur (30) et un dispositif de refroidissement de moteur (41) pour faire circuler un milieu de refroidissement de moteur à travers un passage de circulation pour refroidir le moteur (30), ledit dispositif de refroidissement de moteur (41) comprenant un échangeur de chaleur (44) pour effectuer l'échange de chaleur entre le réfrigérant du côté d'aspiration dudit compresseur (16) et le milieu de refroidissement de moteur, au moins un radiateur (46) pour rayonner de la chaleur du milieu de refroidissement de moteur, et une vanne à trois voies comportant un premier orifice pour délivrer de façon sélective le milieu de refroidissement de moteur audit échangeur de la chaleur (44) et un deuxième orifice pour délivrer de façon sélective le milieu de refroidissement de moteur audit radiateur au nombre d'au moins un (46), ledit échangeur de chaleur (44) et ledit radiateur au nombre d'au moins un (46) étant reliés l'un à l'autre par l'intermédiaire de ladite vanne à trois voies (48) en parallèle dans ledit passage de circulation,
**caractérisé en ce que** la vanne à trois voies est une vanne à trois voies actionnée par un moteur électrique (48) dont le degré d'ouverture est variable, et **en ce que** ledit dispositif de refroidissement de moteur (41) comprend de plus des moyens de réglage de degré d'ouverture de vanne (53) comportant un capteur de pression (51, 52) pour détecter la pression du réfrigérant du côté d'aspiration dudit compresseur (16) et/ou du côté de décharge dudit compresseur (16), lesdits moyens de réglage de degré d'ouverture de vanne (53) réglant le degré d'ouverture de vanne de ladite vanne à trois voies actionnée par un moteur électrique (48) en fonction du résultat du détection dudit capteur de pression (51, 52).

2. Climatiseur (80) selon la revendication 1, dans lequel lesdits moyens de réglage de degré d'ouverture de vanne (53) sont adaptés pour régler le degré d'ouverture de vanne de ladite vanne à trois voies actionnée par un moteur électrique (48) de telle sorte qu'un rapport de distribution du milieu de refroidissement de moteur devant être délivré audit échangeur de chaleur (49) et audit radiateur (46) varie en fonction du résultat de détection dudit capteur de pression (51, 53).

3. Climatiseur selon la revendication 2, dans lequel lesdits moyens de réglage de degré d'ouverture (53) sont adaptés pour régler le degré d'ouverture de vanne de ladite vanne à trois voies actionnée par un moteur électrique (48) de telle sorte que le milieu de refroidissement de moteur soit délivré uniquement du côté de radiateur lors du fonctionnement de refroidissement normal, et que, lorsque le résultat de détection dudit capteur de pression indique que la pression du réfrigérant est réduite à un niveau inférieur à une pression limite inférieure prédéterminée lors d'un fonctionnement de refroidissement, une partie du milieu de refroidissement de moteur soit délivrée au côté dudit échangeur de chaleur.

4. Climatiseur (80) selon la revendication 2, dans lequel lesdits moyens de réglage de degré d'ouverture (53) sont adaptées pour régler le degré d'ouverture de vanne de ladite vanne à trois voies actionnée par un moteur électrique (48) de telle sorte que le milieu de refroidissement de moteur soit délivré uniquement au côté d'échangeur de chaleur lors d'un fonctionnement de chauffage normal, et que, lorsque le résultat de détection dudit capteur de pression indique que la pression du réfrigérant dépasse une pression limite supérieure prédéterminée lors d'un fonctionnement de chauffage, une partie du milieu de refroidissement de moteur soit délivrée au côté dudit radiateur.
